# EUROPEAN PATENT APPLICATION

(11) **EP 1 839 489 A1**
(43) Date of publication of application: **03.10.2007**
(21) Application number: 05803567.6
(22) Date of filing: 10.10.2005
(51) Int. Cl.: A23B 4/02, A23B 4/28, A22C 17/00

(54) **AUTOMATED HAM-PROCESSING METHOD, WHICH IS PERFORMED PRIOR TO CURING IN A DRYING CHAMBER, AND HAM-PROCESSING INSTALLATION**

(30) Priority: 29.10.2004 ES 200402611
(71) Applicant: Laboratorio de Investigacion Tecnologica, S.L., 26006 Logrono (ES)
(72) Inventor: GUTIERREZ FERNÁNDEZ, Andres, E-26006 Logroño (ES)
(74) Representative: Isern-Jara, Nuria
(86) International application number: PCT/ES2005/000554
(87) International publication number: WO 2006/048479

(57) **Abstract**

An automated ham-processing method, which is performed prior to curing in a drying chamber, and to a ham processing installation, comprising said method the stages of bleeding (49) of the piece of meat or ham, placement of the pieces of meat or ham (50), measuring the pH and temperature (51) of the piece of meat or ham, weighing and measuring (52) the piece of meat or ham, injecting salt (53) into the piece of meat or ham, safety weighing (54), injecting salt in order to correct defects (55) in the piece of meat or ham, and labelling (56) of the piece of meat or ham. In this manner, the quality of the products obtained is raised, as it eliminates the number of low-quality hams due to bleeding defects and production costs are reduced.

## Description

### OBJECT OF THE INVENTION

This invention relates to an automated ham-processing method, which is performed prior to curing in a drying chamber, and to a ham processing installation. It involves notable innovations and advantages over the current processes used for that purpose.

More specifically, the process of this invention improves and replaces the current techniques of handling and processing meat products, in particular hams, providing a set of advantages that will be evident in the attached description.

### BACKGROUND OF THE INVENTION

Traditionally, in the meat product processing sector, the raw material, raw meat in this case, must be cured in order to produce an edible end product.

The process or method traditionally used to cure ham specifically comprises the following stages: bleeding, salting, washing and curing.

It is known that after the pig has been slaughtered, it is quartered and stored in refrigerated chambers at 0°C for a period of 24-48 hours in order to reduce the lactic acid in it, bringing the pH to levels of between 5.9 and 6.1, which are the right levels in order to cure it.

The pieces are then transported in refrigerated trucks, whether they are fresh or frozen, to plants where the product (raw material) is handled.

The raw material or piece of meat must not be warmer than 5°C when it is delivered to the plant. However, this temperature is often exceeded and goes beyond the critical point advised for health purposes, which is between 2°C and 5°C for fresh meat and a pH of between 5.9 and 6.1.

Once the pieces of meat have been delivered to the plant, they are stored until processing under controlled humidity and temperature conditions in refrigerated chambers at 0°C.

They are then taken to the work rooms where the bleeding stage is carried out, either manually or mechanically, at a temperature of 10°C.

The manual method consists of pressing one's fingers in rectilinear movements over the veins, pushing the blood out from inside them, while the mechanical means may consist of pressure rollers that act on the meat in a longitudinal direction, or using a rotating cylinder on a slope, which the hams are inserted into and which extracts the blood by randomly hitting the hams.

However, none of these solutions is capable of completely cleaning the veins. Depending on the amount of blood in them, subsequent defects and the beginnings of putrefaction will appear. This results in loss of units or low-quality pieces, affecting approximately 3% of production.

After the bleeding stage, nitrifying salts, sodium nitrate and potassium nitrate, are added to the pieces of meat. These products accelerate the curing process and protect and colour the product during such process.

Once the piece of meat has been bled and nitrified, it is salted.

This stage is performed by burying the piece of meat in large-grain sea salt, at 90% humidity, in superimposed layers, alternating layers of salt with layers of pieces of meat or hams during a 10-day period. This operation is normally carried out by piling the pieces of meat directly on the floor of the salting chamber at 2°C, where they are buried with shovels, or mechanically burying the pieces in tubs to which the salt is added with conveyors.

The aforementioned layout is detrimental to the correct salting of the pieces, as the upper layers of pieces of meat or ham take up less salt than those below because of the difference in pressure due to the weight borne, and because the difference in the mass of meat in different parts of a single piece make the ends saltier than the middle, where there is a considerably greater amount of meat.

After ten days of salting, the pieces are washed by submerging them in water using a machine with rotating rollers, which rubs on the salt stuck to the piece, or showers that lower the salinity of the outer layer that has been in contact with the salt. This operation is carried out with drinking water, which is highly detrimental due to the chlorine it contains, albeit at low concentrations, as it inhibits the formation of cultures required in curing processes.

The salt water run-off from this operation goes into the water drains. This requires environmental charges to be paid for the product and is always harmful to the environment.

Salting using the burying method produces a highly salty surface layer in the piece of meat, which is 4-5 mm thick.

The skin or cortex and the layer of fat on the piece of meat do not absorb the salt, so it must diffuse from the upper layer, which has a high concentration of salt, to the inside of the ham through an osmosis mechanism that tends to equalise differences in saline concentration in cells.

This salt diffusion process currently lasts between 50 and 60 days for saline concentrations of between 1% and 6%, depending on the part of the muscle.

After these operations, the pieces or hams are cured under controlled air speed, humidity and temperature conditions.

### DESCRIPTION OF THE INVENTION

The automated ham processing method, which is performed prior to curing in a drying chamber, and ham processing installation, which is the object of this registration, provides a set of additional advantages that will be apparent from the description below.

The automated ham processing method of this invention comprises a series of stages that prepare the piece of meat or ham before the process of curing in drying chambers, and is characterised in that it comprises the following stages: bleeding, measuring the pH and temperature, weighing and measuring, injecting salt, safety weighing, injecting salt in order to correct defects and labelling.

In order to carry out these stages, the process of this invention is supplemented with a ham processing installation that comprises at least one surface to transport the pieces of meat or ham to be handled, in the manner of a conveyor belt, which carries the pieces of meat to the various work areas, where the aforementioned stages are to be carried out, a vacuum installation, a pressure installation (compressors), a pH- and temperature-measuring device, two weighing systems, a device for measuring the height of the piece of meat or ham, a saline product injection unit, a labelling machine, and a system for storing data and performing movement which is controlled by an automaton and a computer with the corresponding protocol for communication between them.

Before the ham processing method of this invention begins, the data characterising the work to be performed must be entered, such as: identifying the ham producer for which the work is being performed, batch number, its place of origin, units, total weight, desired salinity features, etc. Other data of interest will be provided throughout the process described below.

In accordance with the above description, a ham processing method is defined, which begins after the piece of meat or ham is placed on the conveyor belt, which carries it to the first work area, where the first stage in the process, bleeding, will be carried out.

The bleeding stage consists of manually inserting two catheters into the two main (thickest and longest) veins of the piece of meat obtained from quartering the pig.

These veins are accessed through the area of muscle located to the sides of the piece's patella or ball, since they are easy to locate and manipulate for any person familiar with this process.

The aforementioned catheters are flexible or stiff and resistant plastic tubular parts of the kind used in medicine or veterinary medicine, and have suction holes at their free end and/or in their surrounding.

The catheters are in turn connected to a vacuum installation, such that all of the liquid inside the veins and not connected to the structure of the meat is sucked up and pumped into liquid collection containers.

After this operation, the catheters inserted in the veins are extracted through traction, as the ham is dragged by the conveyor belt it is laid on, which takes it to the second work area.

As the catheters are extracted, the vacuum effect removes the space that had been occupied by the liquid or blood that was in the veins. The walls of the veins are joined together due to the pressure difference and no air is left inside them.

Any degree of vacuum that is able to suck up the liquids in the veins through catheters, the diameters of which are between 1 mm and 15 mm, is sufficient.

The piece of meat or ham travels along the conveyor belt to a sensor that shows the distance there should be between each of the pieces, such that the pieces of ham will be the same distance from one another. Once they are in place, a pressure installation, in the form of compressor plates, preferably two, located to each side of the conveyor belt, moved by mechanical systems, in the manner of pneumatic cylinders, will centre the piece of meat lengthwise on the belt.

The piece of meat or ham is then taken to the second work area where the pH and temperature measurement stage is carried out.

The pH and temperature measurement is carried out with a self-calibrating electronic measurement device, the probes of which are attached to a pneumatic arm that inserts them into the meat.

The data obtained are stored in order to put them in the bar code label that will be attached to the piece of meat or ham at the end of the process of this invention.

The piece of meat or ham is then carried to the work area, where a third operation is carried out, the weighing and measuring stage.

This stage consists of a weighing system that comprises a scales with outputs to the automaton, preferably located below the conveyor belt, the object of which is to tell the weight of the piece of meat or ham. Depending on the salinity set at the start of the production process, it will state the grams of salt to inject in the next stage.

In this stage the height of the piece of meat on the belt is stated with a height measurement device, which preferably consists of sensors that this device has. It is essential to obtain this data for the operation to be carried out in the next stage, as it states the right height for the injectors, since it is calculated so as not to go into the bone in the piece of meat.

Although hams have minimal morphological differences, the bone's location in the leg varies in height, depending on the thickness, by around three centimetres in relation to the belt's base.

After the third stage described, the piece of meat or ham is carried to a fourth work area where the salt is injected using a saline product injection unit, the salt injection stage.

Before continuing, we should state that the saline product consists of a mixture of salt and unchlorinated water, since injecting dry salt causes serious defects to the ham. On the one hand it causes internal encrusting of the salt due to the lack of free water in the piece of meat or ham. On the other hand, inserting dry salt involves the insertion of air in the piece of meat, which causes putrefaction and unpleasant odours.

The saline product in particular consists of a mixture of at least two products, preferably salt and unchlorinated water, in proportions of at least 300 g of salt per 1,000 g of water and no more than 10,000 g of salt per 1,000 g of water or, which amounts to the same thing, 30% to 1,000% salt.

The salt has a granule size of 5 to 1,000 microns.

In order for the injectors to work properly, the powdery products of which the saline product is made up must have a granule size of at least 5 microns and no more than 1,000 microns.

The saline product injection unit comprises a set of working parts on either side of the conveyor belt, which work in a synchronised and symmetrical manner along its longitudinal axis, since the same working parts are laid out to each side of the belt.

These working parts are made up of a lift platform mounted on a support surface or table with mechanical means such as pneumatic cylinders, a carriage mounted on the lift platform, which in turn carries on its base a plurality of smaller carriages that carry the injection system and the injector loading system.

The unit as a whole acts in the following manner: the carriage mounted on the lift platform, which places the carriage in its ideal working position, is pushed forwards (towards the piece of meat centred on the conveyor belt) through mechanical means, such as pneumatic cylinders, until it compresses the piece of meat or ham laterally, by means of the front face or wall that puts the carriage in contact with the piece. Once the carriage's movement has ceased, the smaller carriages are pushed forward through mechanical means, such as pneumatic cylinders, causing needles that comprise the injection system carried on each of the smaller carriages to penetrate the piece of meat until they come up against the front of the carriage opposite, located on the other side of the conveyor belt, or the piece's bone. The smaller carriages then move back, the injection system is activated and the saline product pumped inside the piece.

The forward and backward movement of both the carriage and the smaller carriages acts like a telescopic movement. Furthermore, the carriage's sliding movement may be performed at an angle below the conveyor belt's perpendicular angle of between 0° and 45°.

In particular, the front face or wall that puts the carriage in contact with the piece of meat acts as a pushing surface that gently presses into the ham, formatting its sides and, in turn, sticks out laterally to both sides of the carriage, acting as a surface that pushes the mechanical means that make the carriage go forwards and backwards.

In turn, the face that puts the carriage in contact with the piece of meat or ham has through-holes, adjusted to the diameters of the needles that make up the injection system, such that they run through the holes as guides for their penetration in the piece of meat. Specifically speaking, the holes are set at various heights, producing a set of injections that act on both sides of the piece of meat or ham. They inject the piece both above and below the bone. The number of holes will depend on the number of needles used in the operation.

Moreover, the injection system consists of a mechanical system that can pump the saline product through the aforementioned injection needles, leaving it inside the piece of meat or ham.

Specifically speaking, the injection system carried by each of the smaller carriages comprises the injector of a saline product with its corresponding needle, mechanical means such as a pneumatic cylinder that transmits the forward and backward movement to a piston comprising the injector, and a loading tank that can house the injector, submerging it in the saline product, or on the outside, in the loading tank part, with matching apertures, both in the tank and in the injector, the saline product passes through them from one to the other.

The injector is made up of a stainless steel or plastic hollow cylinder with a length of between 50 mm and 700 mm, the inside of which houses a piston adjusted to the walls of the chamber moved through mechanical means such as a pneumatic cylinder, an anti-return valve and a needle. The injection cylinder also comprises two assembled bodies, preferably screwed together, allowing the inside of them to be accessed in order to solve any difficulty.

The piston's plane of attack has a perimeter of between 3.14 mm and 62.8 mm. If the perimeter of the chamber's virtual plane of attack is wider than the cross-section of the saline product's output tube, the perimeter of which may be between 6.28 mm and 47.1 mm, there must be a reduction in size from the chamber to the output tube that produces a cavity in the shape of a funnel. This reduction will comprise scale values of 1:1 to 1:5, where the first digit is the perimeter of the vertical section of the output tube and the second digit in the scale is the perimeter of the chamber's virtual plane of attack.

The degree that the walls of the reducing cavity slope in relation to the horizontal is between 0° and 80°.

Each piston's loading volume is between a maximum of 62 cm³ and a minimum of 0.157 cm³.

The anti-return valve is in the area in which the two bodies making up the injection cylinder are assembled, and consists of a moving part that closes the saline product output tube when the load is sucked by the piston in its backward movement.

During the piston's forward movement, which pushes the saline product, so that the output tube is not closed by the moving part of the anti-return valve, it is retained by a stopper placed at a minimum distance of 1 mm from the product output hole.

The injector is loaded through an aperture in the injection cylinder at a point marked by the movement of the piston, and its surface area may be between three times the cross-section of the output tube and a quarter of it. This proportion is expressed in mm².

According to another feature of the injector, the needles that are inserted in the meat to unload the saline product may penetrate with a horizontal, vertical or sloping penetration plane. They have an internal diameter of between 1 mm and 15 mm.

At the end of the bevelled cutting edge the needles have a solid needle, the function of which is to limit the penetration when it contacts the wall pushing the ham from the opposite side or its bone, or the penetration limit can be determined by the needle directly with its bevelled cutting edge.

When a needle contacts the bone and cannot go along its entire path, the salt not injected due to lack of a path is distributed among the rest of the needles by the automaton.

Moreover, there are other alternatives for constructing injectors to pump the salt through a needle, such as using an endless screw or paddles mounted on a pump-type rotor.

According to another aspect of the working parts of which the injection unit is made up, the injection loading system comprises a load tank, the upper mouth of which has a join on it attached to a flexible tube, which connects the load tank to a feeder hopper, on the mouth of which there is a join the flexible tube is attached to.

The feeder hopper has a low revolution stirrer that prevents flocculation in the saline product.

The product is put into the hopper by a doser/mixer that regulates the amount of salt needed for each batch of pieces of meat or hams, according to its weight and the desired salinity.

At the hopper output there is a valve that allows the saline product output to be closed. In this section of the tube there is also a water intake, controlled by a valve, which allows the tubing, tank and injector sections to be washed.

After the operations described, the conveyor belt carries the piece of meat or ham to the work area where the fifth stage in the process is carried out, which consists of safety weighing of the piece.

Specifically speaking, this area has a weighing system comprising a scales, with outputs to the automaton, which uses the prior weighing data and the salinity percentage set to calculate the amount of salt injected in the piece.

Thus, if there is an error in injecting the salt, it orders injection in the next work area of the missing grams to complete the amount of salt needed to obtain the salinity set.

In the sixth stage, injecting salt in order to correct defects, mechanical parts just like in the fourth stage, the salt injection stage, inject the missing grams of salt to complete the desired amount of salt.

The piece of meat is then carried to the seventh work area, the labelling stage, where a bar code labelling machine prints out the data gathered in the various operations on a label, which is placed on the piece of meat or ham.

Once this last operation is completed, the piece of meat or ham is prepared to be taken to the process or operation of curing in a drying chamber, which is not described in this invention.

The process described raises the quality of the products obtained, as it eliminates the numbers of low-quality hams due to bleeding defects; curing processes are improved as a consequence of adding salt in a controlled manner according to the weight of the piece of meat or ham and the effect caused by better distribution of the salt; the addition of nitrifiers is eliminated, which makes the product healthier to eat; the processes of washing with chlorinated water, which inhibits the cultures needed for curing are eliminated; and the risk of undesired contamination is considerably reduced as handling of the product and the period of time in which the product is susceptible to deterioration is minimised.

Production costs are advantageously reduced, since there is a reduction in the required amounts of installations (salting chambers), machinery (tubs, sorters, bleeding machine, etc.) and labour and raw materials (salt and nitrifiers).

Furthermore, the process of this invention is much more environmentally-friendly than traditional processes, since the saline water run-off is eliminated, as it is not necessary to wash the hams after salting, which eliminates environmental charges.

Another advantage that is no less notable is the improvement of production control since by labelling all of the features of the ham one can exhaustively monitor the product's quality.

Furthermore, more efficient handling of the ham's salt content enables the development of new product ranges such as hams that are low in salt, and the inclusion of other food products, such as ready-cooked products.

Storage and transport are improved if salting is carried out in quartering facilities, since once the ham has been salted, the length of time it can be stored in the slaughterhouse until it is shipped is lengthened indefinitely, and it is easier to handle varying slaughtering flows. Furthermore, transport is safer, since even if there are temperature fluctuations, salted meat better withstands critical temperature points.

In order to complete the description below, and in order to aid understanding of its features, a set of plans is attached to this description, the figures in which represent the most significant details of the invention in an illustrative and non-limiting manner.

### BRIEF DESCRIPTION OF THE DESIGNS

Figure 1 is a diagrammatic, plan view of the automated ham processing method of this invention;
Figure 2 is an elevated, section view of the saline product injection unit that is part of the ham processing installation of this invention;
Figure 3 is a plan view of the injection system that is part of the injection unit shown in the previous figure;
Figure 4 is an elevated, section view of an injector that is part of the injection system in the previous figure;
Figure 5 is an elevated, section view of the injection unit loading system in figure 2.

### DESCRIPTION OF A PREFERRED EMBODIMENT

In view of the aforementioned figures and in accordance with the numbering used, one can see in them a preferred, but not limiting, embodiment of the invention, which consists of an automated ham processing method, which is performed prior to curing in a drying chamber, and a ham processing installation.

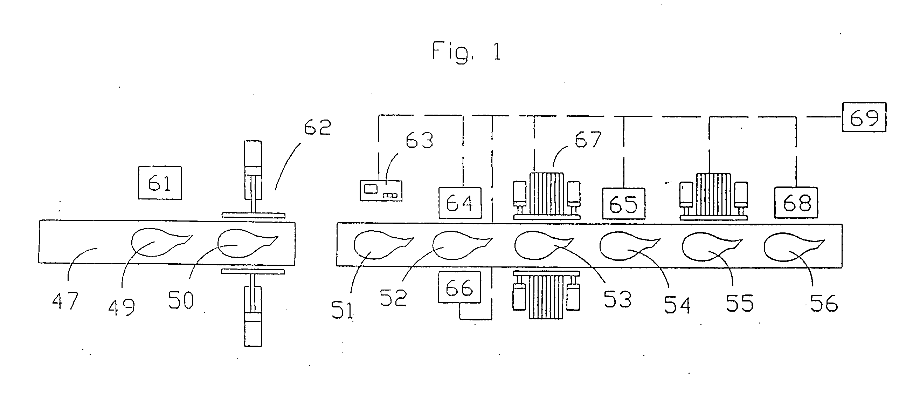

As shown in figure 1, the automated ham processing method, which is performed prior to curing in a drying chamber, comprises a series of stages to prepare the piece of meat or ham before curing in drying chambers, characterised by comprising the following stages: bleeding 49, measuring the pH and temperature 51, weighing and measuring 52, injecting salt 53, safety weighing 54, injecting salt in order to correct defects 55 and labelling 56.

In order to carry out these stages, the process of this invention is supplemented by a ham processing installation that comprises at least a surface 47 to transport the pieces of meat or ham to be handled, in particular in this embodiment, two conveyor belts, which carry the pieces of meat to the different work areas where the aforementioned stages are carried out, a vacuum installation 61, a pressure installation 62, a pH- and temperature-measuring device 63, two weighing systems 64 and 65, a device 66 to measure the height of the piece of meat or ham, two saline product injection units 67 and 70, a labelling machine 68, a data storage and movement performance system 69, which is controlled by an automaton and a computer with the relevant protocol for communication between them.

Before the ham processing method of this invention begins, the data characterising the work to be performed are entered, which include: identifying the ham producer for which the work is being carried out, batch number, its place of origin, units, total weight, desired salinity features, etc. Other data of interest will be provided throughout the process described below.

The ham processing method begins after the piece of meat or ham is placed on the conveyor belt, which carries it to the first work area, where the first stage in the process, bleeding 49, will be carried out.

The bleeding 49 stage consists of manually inserting two catheters into the two main veins (the thickest and longest) of the piece of meat obtained from quartering the pig. These veins are accessed through the area of muscle located to the sides of the piece's patella or ball, since they are easy to locate and manipulate for any person familiar with this process (not shown).

The aforementioned catheters are flexible or stiff and resistant plastic tubular parts of the kind used in medicine or veterinary medicine, and have suction holes at their free end and/or in their surrounding (not shown).

The catheters are in turn connected to a vacuum installation 61, such that all of the liquid inside the veins and not connected to the structure of the meat is sucked up and pumped into liquid collection containers (not shown).

After this operation, the catheters inserted in the veins are extracted through traction, as the ham is dragged by the conveyor belt it is laid on, which takes it to the second work area (not shown).

As the catheters are extracted, the vacuum effect removes the space that had been occupied by the liquid or blood that was in the veins. The walls of the veins are joined together due to the pressure difference and no air is left inside them (not shown).

Any degree of vacuum that is able to suck up the liquids in the veins through catheters, the diameters of which are between 1 mm and 15 mm, is sufficient (not shown).

The piece of meat or ham travels along the conveyor belt to a sensor that shows the distance there should be between each of the pieces, such that the pieces of ham will be the same distance from one another. Once they are in place, a pressure installation 62, in the form of compressor plates, preferably two, located to each side of the conveyor belt, moved by mechanical systems, in the manner of pneumatic cylinders, will centre the piece of meat lengthwise on the belt. This is the stage of placing the pieces of meat or ham 50.

The piece of meat or ham is then taken to the second work area where the pH and temperature measurement stage is carried out 51.

The pH and temperature measurement is carried out with a self-calibrating electronic measurement device, the probes of which are attached to a pneumatic arm that inserts them into the meat (not shown).

The data obtained are stored in order to put them in the bar code label that will be attached to the piece of meat or ham at the end of the process of this invention (not shown).

The piece of meat or ham is then carried to the work area, where a third operation is carried out, the weighing and measuring stage 52.

This stage consists of a weighing system 64 that comprises a scales with outputs to the automaton, which states the weight of the piece of meat or ham and, depending on the salinity set at the start of the production process, it will state the grams of salt to inject in the next stage.

In turn, in this stage the height of the piece of meat on the belt is stated with a height measurement device 66, which preferably consists of sensors that this device has. It is essential to obtain this data for the operation to be carried out in the next stage, as it states the right height for the injectors, since it is calculated so as not to go into the bone in the piece of meat.

After the third stage described, the piece of meat or ham is carried to a fourth work area where the salt is injected using a saline product injection unit 67, the salt injection stage 53.

The saline product in particular consists of a mixture of at least two products, preferably salt and unchlorinated water, in proportions of at least 300 g of salt per 1,000 g of water and no more than 10,000 g of salt per 1,000 g of water or, which amounts to the same thing, 30% to 1,000% salt.

In order for the injectors to work properly, the powdery products of which the saline product is made up must have a granule size of at least 5 microns and no more than 1,000 microns.

The saline product injection unit comprises a set of working parts on either side of the conveyor belt, which work in a synchronised and symmetrical manner along its longitudinal axis, since the same working parts are laid out to each side of the belt.

After the operations described, the conveyor belt carries the piece of meat or ham to the work area where the fifth stage in the process is carried out, which consists of safety weighing 54 of the piece.

Specifically speaking, this area has a weighing system 65 comprising a scales, with outputs to the automaton, which uses the prior weighing data and the salinity percentage set to calculate the amount of salt injected in the piece.

Thus, if there is an error in injecting the salt, it orders injection in the next work area of the missing grams to complete the amount of salt needed to obtain the salinity set.

In the sixth stage, injecting salt in order to correct defects 55, mechanical parts just like in the fourth stage, the salt injection stage, inject the missing grams of salt to complete the desired amount of salt. However, the injection is carried out with a single needle on one side of the conveyor belt.

The piece of meat is then carried to the seventh work area, the labelling stage 56, where a bar code labelling machine 68 prints out the data gathered in the various operations on a label, which is placed on the piece of meat or ham.

Once this last operation is completed, the piece of meat or ham is prepared to be taken to the curing operation, which is not described in this invention.

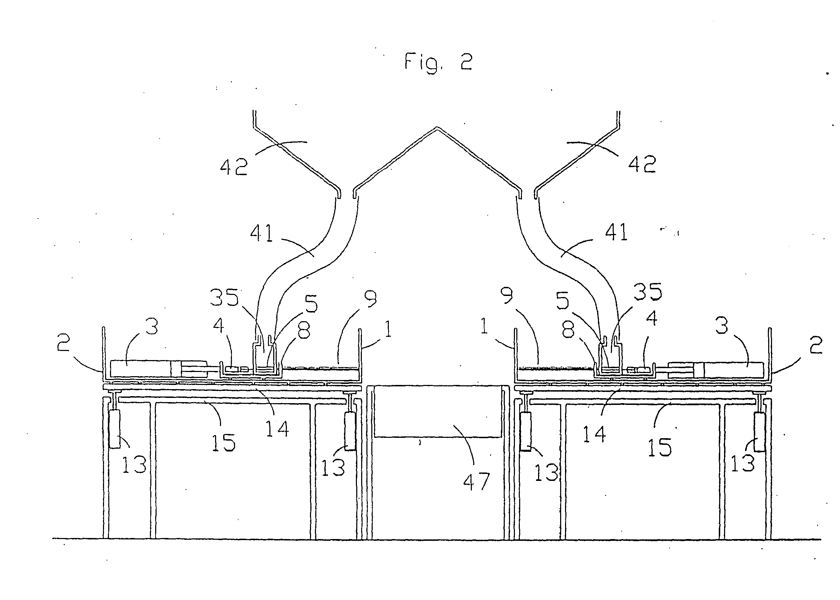

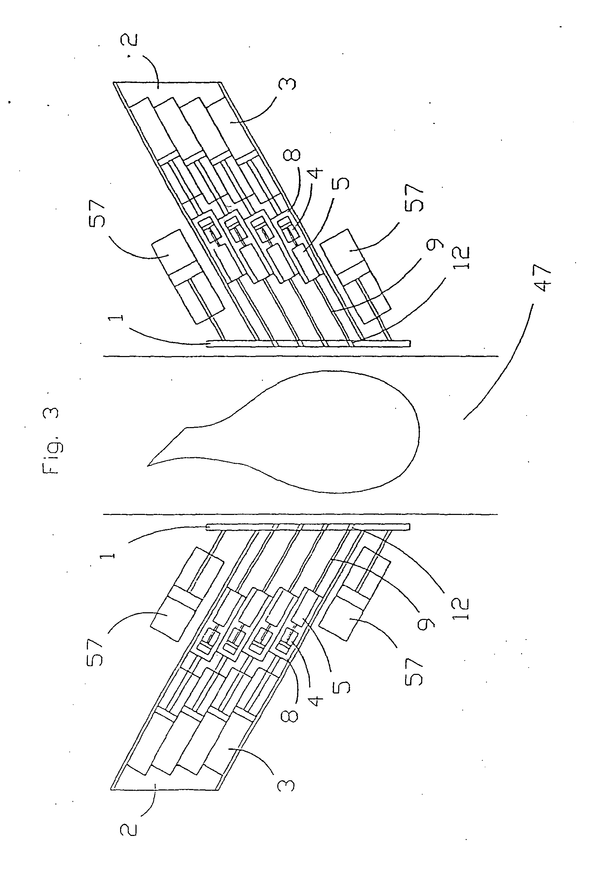

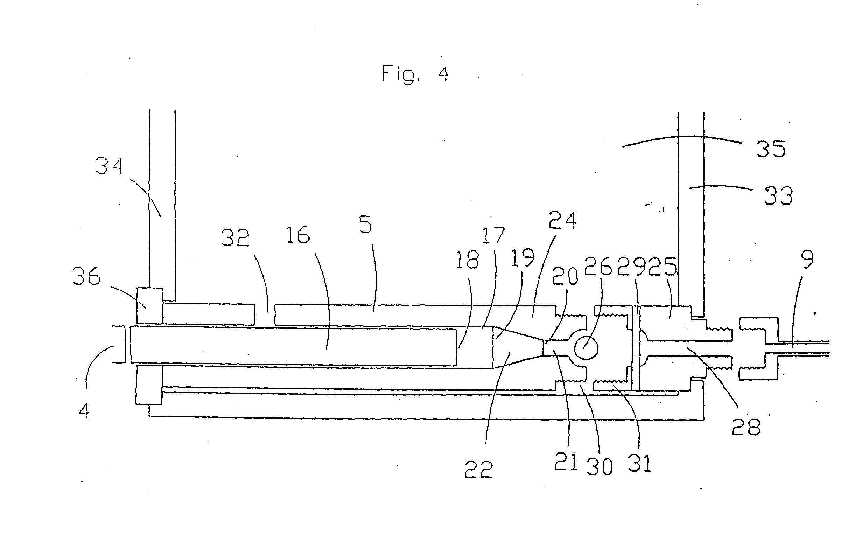

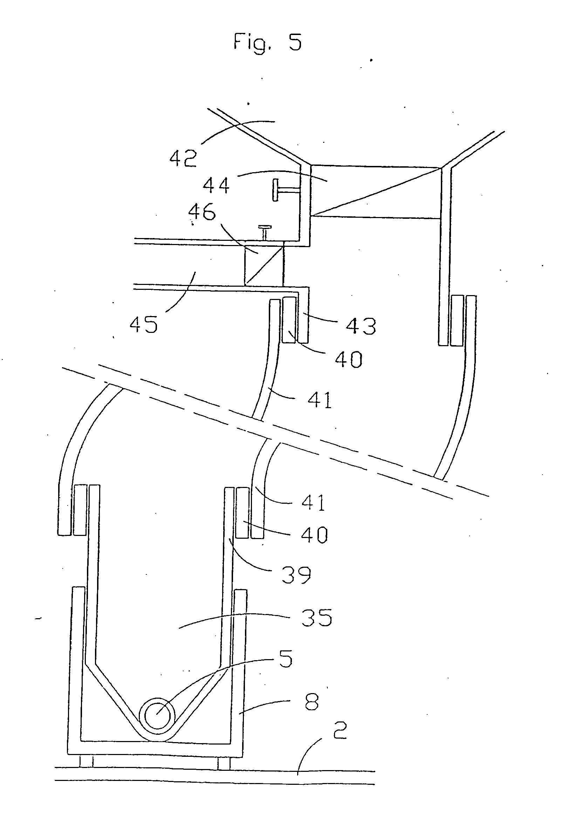

Figures 2, 3, 4 and 5 show the structural configuration of the saline product injection unit, which is made up of two groups of working parts, made up of a lift platform 14 mounted on a support surface or table 15 with mechanical means 13 such as pneumatic cylinders 13, a carriage 2 mounted on the lift platform 14, which in turn carries on its base a plurality of smaller carriages 8 that carry the injection system and the injector loading system.

The unit as a whole acts in the following manner: the carriage 2 mounted on the lift platform 14, which places the carriage 2 in its ideal working position, is pushed forwards (towards the piece of meat centred on the conveyor belt) through mechanical means 57, such as pneumatic cylinders, until it compresses the piece of meat or ham laterally, by means of the front face or wall 1 that puts the carriage 2 in contact with the piece. Once the carriage's 2 movement has ceased, the smaller carriages 8 are pushed forward through mechanical means 3, such as pneumatic cylinders, causing needles 9 that comprise the injection system carried on each of the smaller carriages to penetrate the piece of meat until they come up against the front of the carriage opposite, located on the other side of the conveyor belt, or the piece's bone.

The smaller carriages then move back, the injection system is activated and the saline product pumped inside the piece.

The forward and backward movement of both the carriage 2 and the smaller carriages 8 acts like a telescopic movement. Furthermore, the carriage's 2 sliding movement may be performed at an angle below the conveyor belt's perpendicular angle of between 0° and 45°.

In particular, the front face or wall 1 that puts the carriage 2 in contact with the piece of meat acts as a pushing surface that gently presses into the ham, formatting its sides.

Furthermore, the front face that puts the carriage 2 in contact with the piece of meat or ham has through-holes 12, adjusted to the diameters of the needles 9 that make up the injection system, such that they run through the holes as guides for their penetration in the piece of meat. Specifically speaking, the holes are set at various heights, producing a set of injections that act on both sides of the piece of meat or ham. They inject the piece both above and below the bone. The number of holes will depend on the number of needles 9 used in the operation.

Moreover, the injection system consists of a mechanical system that can pump the saline product through the aforementioned injection needles 9 leaving it inside the piece of meat or ham.

Specifically speaking, the injection system carried by each of the smaller carriages 8 comprises the injector of a saline product 5 with its corresponding needle 9, mechanical means 4 such as a pneumatic cylinder that transmits the forward and backward movement to a piston 16 comprising the injector, and a loading tank 35 that can house the injector, submerging it in the saline product.

The injector is made up of a stainless steel or plastic hollow cylinder with a length of between 50 mm and 700 mm, the inside of which houses a piston 16 adjusted to the walls of the chamber 17 moved through mechanical means 4 such as a pneumatic cylinder, an anti-return valve 26 and a needle 9. The injection cylinder also comprises two assembled bodies 24 and 25, preferably screwed together 30 and 31, allowing the inside of them to be accessed in order to solve any difficulty.

The piston's 16 plane of attack 18 has a perimeter of between 3.14 mm and 62.8 mm. If the perimeter of the chamber's 17 virtual plane of attack 19 is greater than the perimeter of the cross-section 20 of the saline product's output tube 21, the perimeter of which may be between 6.28 mm and 47.1 mm, there must be a reduction in size from the chamber 17 to the output tube 21 that produces the cavity 22. This reduction will comprise scale values of 1:1 to 1:5, where the first digit is the perimeter of the vertical section 20 of the output tube 21 and the second digit in the scale is the perimeter of the chamber's 17 virtual plane of attack 19.

The degrees that the walls of the reducing cavity 22 slope in relation to the horizontal is between 0° and 80°.

Each piston's loading volume is between a maximum of 62 cm³ and a minimum of 0.157 cm³.

The anti-return valve 26 is in the area in which the two bodies making up the injection cylinder are assembled, and consists of a moving part that closes the saline product output tube 21 when the load is sucked up by the piston 16 in its backward movement.

During the piston's 16 forward movement, which pushes the saline product, so that the output tube is not closed by the moving part of the anti-return valve 26, it is retained by a stopper 29 placed at a minimum distance of 1 mm from the saline product output hole 28.

The injector is loaded through an aperture 32 in the injection cylinder at a point marked by the movement of the piston 16 and its surface area may be between three times the cross-section of the output tube 21 and a quarter of it. This proportion is expressed in mm².

Moreover, the injector slots into recesses on the front and rear wall 33 and 34 of the load tank 35, since it is submerged in it in the lower part of it.

The rear wall 34 of the load tank 35 has a through-hole adjusted to the injector's piston 16, through which it moves, and also has a gasket 36 that prevents the saline product from coming out. The front wall 33 has a hole through which the injector connects to the needle 9.

According to another aspect of the injector, the needles 9 that are inserted in the meat to unload the saline product may penetrate with a horizontal, vertical or sloping penetration plane. They have an internal diameter of between 1 mm and 15 mm and they are 5 mm to 700 mm long.

Furthermore, at the end of the bevelled cutting edge the needles 9 have a solid needle 5 mm to 300 mm long and 1 mm to 150 mm wide, the function of which is to limit the penetration when it contacts the wall pushing the ham from the opposite side or its bone (not shown).

When a needle 9 contacts the bone and cannot go along its entire path, the salt not injected due to lack of a path is distributed among the rest of the needles by the automaton (not shown).

According to another aspect of the working parts of which the injection unit is made up, the injection loading system comprises a load tank 35, the upper mouth 39 of which has a join 40 on it attached to a flexible tube 41, which connects the load tank to a feeder hopper 42 on the mouth 43 on which there is a join 40 the flexible tube 41 is attached to.

The feeder hopper 42 has a low revolution stirrer that prevents flocculation in the saline product. The product is put into the hopper by a doser/mixer that regulates the amount of salt needed for each batch of pieces of meat or hams, according to its weight and the desired salinity.

At the hopper output there is a valve 44 that allows the saline product output to be closed. In this section of the tube there is also a water intake 45, controlled by a valve 46, which allows the tubing, tank and injector sections to be washed.

The details, forms, dimensions and other accessory parts, as well as the materials used in the ham processing, before the start of the curing, and the ham processing installation in the invention may be appropriately substituted with others that are technically equivalent and do not depart from the essence of the invention or the extent defined by the claims set out below.

## Claims

1. An automated ham processing method, which is performed prior to curing in a drying chamber, essentially **characterised by** comprising the following stages: bleeding (49) of the piece of meat or ham, placement of the pieces of meat or ham (50), measuring the pH and temperature (51) of the piece of meat or ham, weighing and measuring (52) the piece of meat or ham, injecting salt (53) into the piece of meat or ham, safety weighing (54), injecting salt in order to correct defects (55) in the piece of meat or ham, and labelling (56) of the piece of meat or ham.

2. An automated ham processing method, according to the previous claim, **characterised by** the bleeding stage (49) being carried out by applying a vacuum to the veins in the piece of meat or ham.

3. An automated ham processing method, according to the previous claims, **characterised by** the vacuum being applied through the use of suction catheters connected to a vacuum installation, which can be inserted in the veins in the piece of meat or ham.

4. An automated ham processing method, according to claim 1, **characterised by** the pH and temperature measurement being carried out in the pH and temperature measurement (51) stage by a measurement device that has probes that are inserted in the piece of meat or ham.

5. An automated ham processing method, according to claim 1, which is **characterised by** the weight of the piece of meat or ham being stated in the weighing and measuring stage (52) by means of a weighing system (64), and the height of the piece of meat being stated by means of a height measurement device (66), which figure determines the height at which the injections will be performed in the salt injection stage (53).

6. An automated ham processing method, according to claim 1, **characterised by** the salt being injected in the piece of meat or ham in the salt injection stage (53) by a saline product injection unit (67).

7. An automated ham processing method, according to claim 1, **characterised by** the amount of saline product that is to be injected in the piece of meat or ham being determined, in the safety weighing stage (54) by a weighing system (65), which calculates the possibility of errors in the amounts injected.

8. An automated ham processing method, according to claim 1, **characterised by** salt being injected in the piece of meat or ham, by a saline product injection unit, in the stage of injecting salt in order to correct defects (55) in order to correct or achieve the amount of salt one wishes to leave in the piece of meat or ham.

9. An automated ham processing method, according to claim 1, **characterised by** the piece of meat or ham being labelled with a bar code, in the labelling stage (56), by means of a labelling machine (68), containing all of the data from the work performed.

10. A ham processing installation, according to claims 1 to 9, **characterised by** comprising at least a surface (47) for transporting the pieces of meat or ham to be handled, which carries the pieces of meat to the various work areas, where the stages in the process will be carried out, a vacuum installation (61), a pressure installation (62), a pH- and temperature-measuring device (63), two weighing systems (64 and 65), a device (66) for measuring the height of the piece of meat or ham, two saline product injection units (67) and (70), a labelling machine (68), and a system for storing data and performing movement (69) which is controlled by an automaton and a computer with the relevant protocol for communication between them.

11. A ham processing installation, according to claim 10, **characterised by** the injection unit of saline product (67) comprising two groups of working parts laid out opposite one another and symmetrically on each side of the transport surface (47), and each group of working parts comprising a lift platform (14) laid out on a support surface or table (15). A sliding carriage (2) is placed on the lift platform by mechanical means (13) and pushes and presses the piece of meat or ham. On its base it transports a plurality of smaller sliding carriages (8), each of which carry an injection system and an injector loading system.

12. A ham processing installation according to claim 11, **characterised by** the carriage (2) and the smaller carriages (8) being linked by mechanical means (57 and 3) capable of transmitting their forward and backward movement.

13. A ham processing installation according to claims 11 and 12, **characterised by** the forward movement of the carriage (2) and the smaller carriages (8) being at an angle below the vertical of the transport surface (47) of between 0° and 45°.

14. A ham processing installation according to claim 11, **characterised by** the carriage (2) having through-holes (12) on the face or wall (1) that comes into contact with the piece of meat or ham, laid out at different heights, with diameters adjusted to the diameters of the needles (9) that comprise the injection system, such that the latter run through the holes, which act as guides for their penetration in the piece of meat.

15. A ham processing installation according to claim 11, **characterised by** the injection system carried out by each of the smaller carriages (8) comprising the salt injector (5) with its corresponding needle, mechanical means (4) that transmit the backward and forward movement of a piston (16) comprising the injector, and a loading tank (35).

16. A ham processing installation according to claim 15, **characterised by** the salt injector (5) being housed inside the load tank (35) and submerged in the saline product.

17. A ham processing installation according to claim 15, **characterised by** the salt injector (5) being housed outside the load tank (35) and the salt injector (5) having holes lined up with those in the load tank (35) through which the saline product runs.

18. A ham processing installation according to claim 15, **characterised by** the salt injector (5) being made up of a hollow cylinder between 50 mm and 700 mm long, comprising two assembled bodies (24 and 25), the inside of which houses a piston (16) adjusted to the walls of the cylinder's internal chamber (17) the plane of attack of which has a perimeter of between 3.14 mm and 6.28 mm., and containing an anti-return valve (26) in the assembly area.

19. A ham processing installation according to claim 18, **characterised by** the perimeter of the chamber's (17) virtual plane of attack being greater than the perimeter of the cross-section (20) of the output tube, and there being a reduction of between 1:1 and 1:5 in scale terms, where the first digit is the perimeter of the output tube's cross-section and the second digit is the perimeter of the virtual plane of attack.

20. A ham processing installation according to claim 19, **characterised by** the walls producing the reduction in the chamber's (17) dimensions to the output tube having an angle of between 0° and 80° above the horizontal.

21. A ham processing installation according to claim 18, **characterised by** the chamber (17) having a load volume of between 62 cm³ and 0.157 cm³.

22. A ham processing installation according to claim 15, **characterised by** the salt injector (5) having an aperture (32) at a point marked by the path of the piston (16) in order to load it, the intake surface area of which is between a quarter of the surface area of the cross-section (20) of the output product (21) and four times it, expressed in mm².

23. A ham processing installation according to claim 15 and according to an alternative embodiment, **characterised by** the salt injector (5) being made up of an endless screw.

24. A ham processing installation according to claim 15 and according to an alternative embodiment, **characterised by** the salt injector (5) being made up of paddles mounted on a pump-type rotor.

25. A ham processing installation according to claim 15, **characterised by** the needles (9) having an internal diameter of between 1 mm and 15 mm.

26. A ham processing installation according to claim 15, **characterised by** the needles (9) having a prolongation on their cutting edge in the form of a solid needle suitable for making contact with a body harder than the piece of meat or ham and ordering the injection system to go backwards.

27. A ham processing installation according to claim 15, **characterised by** the injector loading system comprising a load tank (35), the upper mouth (39) of which has a join (40) on it attached to a tube, which connects the load tank (35) to a feeder hopper (42).

28. A ham processing installation according to claim 27, **characterised by** the feeder hopper (42) having a stirrer that prevents flocculation in the saline product.

29. A ham processing installation according to claims 27 and 28, **characterised by** the hopper having a saline product doser/mixer on its intake, which regulates the amount of salt needed for each batch of pieces of meat or hams, according to their weight and the desired salinity.

30. A ham processing installation according to claims 27, 28 and 29, **characterised by** the hopper having a water intake (45).

31. A ham processing method, according to claim 1, **characterised by** the saline product to be injected being a mixture of at least two components, and two of the components being unchlorinated water and salt in proportions of between 30% salt and 1,000% salt expressed in grams of product.

32. A ham processing method, according to claim 31, **characterised by** the salt having a grain size of between 5 and 1,000 microns.
